# EUROPÄISCHE PATENTSCHRIFT

(11) **EP 3 383 135 B1**
(45) Veröffentlichungstag und Bekanntmachung des Hinweises auf die Patenterteilung: **30.11.2022**
(21) Anmeldenummer: 18159983.8
(22) Anmeldetag: 05.03.2018
(51) Int. Cl.: H05B 6/12, A47J 36/34, F24C 7/06, F24C 15/10

(54) **KOCHSYSTEM MIT POSITIONIERUNG EINER AUFSTELLEINHEIT**
COOKING SYSTEM FOR POSITIONING AN INSTALLATION UNIT
SYSTÈME DE CUISSON AVEC UNE UNITÉ DE POSITIONNEMENT

(30) Priorität: 30.03.2017 ES 201730506
(43) Veröffentlichungstag der Anmeldung: 03.10.2018
(73) Patentinhaber: BSH Hausgeräte GmbH, 81739 München (DE)
(72) Erfinder: Lasobras Bernad, Javier, 50016 EJEA DE LOS CABALLEROS (ZARAGOZA) (ES); Llorente Gil, Sergio, 50009 Zaragoza (ES); Mir Bel, Jorge, 50019 Zaragoza (ES); Rivera Peman, Julio, 50410 Cuarte de Huerva (Zaragoza) (ES)

(56) Entgegenhaltungen:
- WO-A1-2016/185303
- WO-A1-2017/052282
- WO-A1-2017/103712
- DE-A1- 10 343 011
- DE-A1-102010 039 071
- GB-A- 2 506 907
- US-A1- 2009 095 736

## Beschreibung

Aus dem Stand der Technik sind Kochsysteme mit zumindest einer Unterlegeinheit bekannt, welche zu einem Auflegen auf einer Abdeckplatte eines Kochfelds ausgebildet ist. Die Unterlegeinheit ist in einem Heizbetriebszustand zwischen der Abdeckplatte und einem beheizten Gargeschirr angeordnet. Das Kochsystem umfasst zudem eine Positionierungseinheit, welche zu einer Unterstützung einer Positionierung der Unterlegeinheit relativ zu der Induktionsheizeinheit vorgesehen ist, wobei zur Unterstützung der Positionierung der Unterlegeinheit ein Beschleunigungssensor und/oder eine Kamera des Kochsystems zum Einsatz kommt.

Beispielsweise zeigt die Druckschrift GB 2 506 907 A ein Kochsystem nach dem Oberbegriff des Anspruchs 1.

Zudem ist aus der Druckschrift WO 2016/185303 A1 eine Aufstelleinheit zum Aufstellen auf eine Kochfeldplatte bekannt, welche eine Lebensmittelbearbeitungseinheit zum Bearbeiten eines von der Aufstelleinheit aufgenommenen Lebensmittels aufweist.

Die Aufgabe der Erfindung besteht insbesondere darin, eine gattungsgemäße Vorrichtung mit verbesserten Eigenschaften hinsichtlich einer Positionierungsunterstützung bereitzustellen. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung betrifft ein Kochsystem mit zumindest einer Aufstelleinheit, welche in wenigstens einem Heizbetriebszustand zu einer Anordnung oberhalb einer Abdeckplatte vorgesehen ist, mit einer Induktionsheizeinheit, welche zu einer Erhitzung zumindest eines Teils der Aufstelleinheit vorgesehen ist, und mit einer Positionierungseinheit, welche zu einer Unterstützung einer Positionierung der Aufstelleinheit relativ zu der Induktionsheizeinheit vorgesehen ist.

Die Positionierungseinheit weist wenigstens ein der Aufstelleinheit zugeordnetes Positionierungselement auf, welches als induktives Element ausgebildet und dazu vorgesehen ist, zumindest teilweise zu der Unterstützung der Positionierung der Aufstelleinheit relativ zu der Induktionsheizeinheit beizutragen. Durch diese Ausgestaltung kann insbesondere eine vorteilhafte Positionierungsunterstützung geschaffen werden. Ferner kann ein insbesondere von einer externen Energiequelle unabhängig betriebsbereites Positionierungselement bereitgestellt werden, wodurch insbesondere Energiekosten gesenkt werden können und vorteilhaft folglich auf eine kabelgestützte Verbindung mit einer externen Energiequelle verzichtet werden kann. Ferner kann insbesondere eine Anwendungsflexibilität verbessert und vorteilhaft ein Bedienkomfort erhöht werden. Zudem können vorteilhaft Material- und/oder Herstellungskosten sowie ein Wartungsaufwand gesenkt werden.

Unter einer "Aufstelleinheit" soll eine Einheit verstanden werden, welche zu einem Aufstellen und/oder Auflegen auf einer Abdeckplatte vorgesehen ist, und zwar insbesondere zum Zweck einer Beheizung zumindest eines Teils der Aufstelleinheit. Die Aufstelleinheit könnte beispielsweise zumindest ein Kochgeschirrelement aufweisen.

Insbesondere könnten Objekte der Aufstelleinheit, wie beispielsweise eine Bedieneinheit und/oder eine Steuereinheit und/oder eine Sensoreinheit und/oder eine Sendeeinheit, zumindest teilweise und vorteilhaft wenigstens zu einem Großteil in der Unterlegeinheit integriert sein.

Unter einer "Unterlegeinheit" soll eine Einheit verstanden werden, welche insbesondere zu einem Auflegen, insbesondere zu einer Platzierung und/oder Positionierung, auf der Abdeckplatte des Kochsystems, insbesondere eines Kochfelds des Kochsystems, und welche insbesondere in dem Heizbetriebszustand eine Unterlage für das beheizte Kochgeschirrelement wenigstens teilweise ausbildet. In einer Einbaulage ist die Unterlegeinheit insbesondere zu einer Platzierung oberhalb eines Kochfelds, insbesondere oberhalb der Abdeckplatte, vorgesehen. Die Abdeckplatte ist insbesondere als Küchenarbeitsplatte ausgebildet.

Gemäß der Erfindung, weist die Aufstelleinheit zumindest eine Gehäuseeinheit auf, welche als eine Außengehäuseeinheit ausgebildet ist und ein Außengehäuse der Aufstelleinheit wenigstens zu einem Großteil ausbildet. Insbesondere könnte zumindest ein Objekt der Aufstelleinheit, insbesondere mehrere Objekte der Aufstelleinheit und vorteilhaft alle Objekte der Aufstelleinheit, wie beispielsweise eine Bedieneinheit und/oder eine Steuereinheit und/oder eine Sensoreinheit und/oder eine Sendeeinheit, zumindest teilweise und vorteilhaft wenigstens zu einem Großteil in der Gehäuseeinheit integriert sein. Unter "wenigstens zu einem Großteil" soll insbesondere zu einem Anteil, insbesondere einem Massenanteil und/oder Volumenanteil, von mindestens 70 %, insbesondere von mindestens 80 %, vorteilhaft von mindestens 90 % und vorzugsweise von mindestens 95 % verstanden werden.

Das Kochsystem weist insbesondere das Kochfeld auf. Unter einem "Kochfeld" soll eine Einheit verstanden werden, welche zumindest eine Induktionsheizeinheit, eine Versorgungseinheit und eine Elektronikeinheit des Kochfelds aufweist, welche insbesondere dazu vorgesehen ist, in dem Heizbetriebszustand eine Versorgungseinheit insbesondere zu einer Versorgung der Induktionsheizeinheit mit Energie, insbesondere mit elektrischer Energie, anzusteuern, wobei die Induktionsheizeinheit in dem Heizbetriebszustand in Abhängigkeit einer Versorgung durch die Versorgungseinheit insbesondere zu einer Bereitstellung von Energie, insbesondere von elektromagnetischer Energie, insbesondere induktiver Energie, an zumindest einen Teil der Aufstelleinheit, insbesondere an wenigstens ein Kochgeschirrelement, insbesondere an das Kochgeschirrelement, der Aufstelleinheit und/oder von zumindest einer Wandung einer Gehäuseeinheit der Aufstelleinheit, vorgesehen ist.

Das Kochfeld kann insbesondere eine Kochfeldplatte aufweisen, wobei die Abdeckplatte zumindest teilweise einstückig mit der Kochfeldplatte ausgebildet und/oder vollständig als Kochfeldplatte ausgebildet sein kann. Die Aufstelleinheit, insbesondere die Unterlegeinheit der Aufstelleinheit, ist insbesondere von dem Kochfeld, insbesondere von der Abdeckplatte, verschieden und/oder vorteilhaft relativ zu dem Kochfeld, insbesondere zu der Abdeckplatte, beweglich. Insbesondere ist die Aufstelleinheit, insbesondere Unterlegeinheit der Aufstelleinheit, als eine separate Einheit ausgebildet. Insbesondere kann eine als separate Einheit ausgebildete Aufstelleinheit und/oder Unterlegeinheit an einer beliebigen Position auf der Abdeckplatte positioniert werden. Unter einer "Abdeckplatte" soll insbesondere ein Element verstanden werden, welches dazu vorgesehen ist, wenigstens eine Heizeinheit, welche insbesondere in dem Heizbetriebszustand zu einer, vorteilhaft induktiven, Erhitzung des Kochgeschirrelements vorgesehen ist, zumindest teilweise, vorzugsweise wenigstens zu einem Großteil und besonders bevorzugt vollständig, abzudecken. Die Abdeckplatte kann insbesondere als Kochfeldplatte, wie beispielsweise als Glaskeramikplatte, und/oder als Arbeitsplatte, wie beispielsweise als Küchenarbeitsplatte, ausgebildet sein.

Insbesondere ist die Aufstelleinheit, insbesondere die Unterlegeinheit, der Aufstelleinheit, zu einer Verwendung mit dem Kochfeld und vorzugsweise mit verschiedenen Kochfeldern vorgesehen. Das Kochfeld ist insbesondere zu einer Verwendung mit zumindest einer Aufstelleinheit, insbesondere mit zumindest einer Unterlegeinheit und/oder mit zumindest einem Kochgeschirrelement und/oder mit zumindest einer Gehäuseeinheit der Aufstelleinheit, und vorteilhaft wenigstens im Wesentlichen zeitgleich mit zumindest zwei, vorteilhaft mit zumindest drei und vorzugsweise mit zumindest vier Aufstelleinheiten, insbesondere Unterlegeinheiten und/oder Kochgeschirrelementen und/oder Gehäuseeinheiten der Aufstelleinheit, vorgesehen. Das Kochfeld ist vorzugweise als ein Matrixkochfeld ausgebildet. Unter der Wendung, dass das Kochfeld zu einer Verwendung "wenigstens im Wesentlichen" zeitgleich mit zumindest zwei Aufstelleinheiten vorgesehen ist, soll insbesondere verstanden werden, dass das Kochfeld in zumindest einem Zeitabschnitt zu einer Verwendung mit den Aufstelleinheiten vorgesehen ist, wobei insbesondere das Kochfeld in zumindest einem weiteren Zeitabschnitt zu einer Verwendung mit insbesondere genau einer Aufstelleinheit vorgesehen sein könnte.

Die Induktionsheizeinheit ist insbesondere dazu vorgesehen, mittels zumindest eines Induktionsheizelements, welches insbesondere als eine Spule ausgebildet ist, vorzugsweise mittels einer Mehrzahl von Induktionsheizelementen eine elektrische Energie in eine induktive Energie umzuwandeln und der Aufstelleinheit, insbesondere dem Kochgeschirrelement und/oder zumindest einer Wandung der Gehäuseeinheit, zu einer Umwandlung in Wärme zuzuführen. Insbesondere bildet die Unterlegeinheit die Unterlage für das beheizte Kochgeschirrelement wenigstens im Wesentlichen aus. Die Unterlegeinheit weist insbesondere eine wenigstens im Wesentlichen plattenförmige Gestalt auf.

Unter einer "Positionierungseinheit" soll eine Einheit verstanden werden, welche in zumindest einem Betriebszustand eine Position der Aufstelleinheit relativ zur Induktionsheizeinheit erkennt und insbesondere zur Weiterverarbeitung bereitstellt, insbesondere anzeigt. Darunter, dass "das Positionierungselement zumindest teilweise zur Unterstützung der Positionierung einer Einheit vorgesehen ist", soll hier insbesondere verstanden werden, dass das Positionierungselement insbesondere einen Teil einer Positionierungseinheit ausbildet und zumindest zu einer Unterstützung der Positionierung der Einheit relativ zu dem Kochfeld beiträgt.

Unter "vorgesehen" soll insbesondere speziell ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Das Positionierungselement ist zumindest teilweise in der Aufstelleinheit, insbesondere in der Unterlegeinheit und/oder in dem Kochgeschirrelement und/oder in der Gehäuseeinheit, integriert. Dadurch kann insbesondere ein kompaktes und vorteilhaft bauraumsparendes Positionierungselement erhalten und vorteilhaft Material- und/oder Herstellungskosten reduziert werden. Darunter, dass "das Positionierungselement in einer Einheit integriert ist", soll insbesondere verstanden werden, dass die Einheit zumindest bereichsweise und/oder abschnittsweise, insbesondere wenigstens zu einem Großteil und vorteilhaft vollständig das Positionierungselement umgreift und/oder formschlüssig umgibt. Insbesondere ist das Positionierungselement vollständig in der Einheit integriert. Unter der Wendung, dass das Positionierungselement "zumindest teilweise" in einer Einheit integriert ist, soll insbesondere verstanden werden, dass das Positionierungselement zumindest ein Element aufweist, welches in der Einheit integriert ist, und beispielsweise zumindest ein weiteres Element aufweisen könnte, welches von dem Element verschieden sein könnte und welches insbesondere außerhalb der Einheit und/oder getrennt von der Einheit angeordnet sein könnte.

Möglicherweise könnte das Positionierungselement dazu vorgesehen sein, zumindest teilweise zu einer Unterstützung einer Positionierung einer Unterlegeinheit der Aufstelleinheit relativ zu der Induktionsheizeinheit beizutragen. Dadurch kann insbesondere eine vorteilhafte Positionierungsunterstützung geschaffen werden.

In einer bevorzugten Ausgestaltung der Erfindung wird vorgeschlagen, dass das Positionierungselement als Spule ausgebildet ist. Dadurch kann insbesondere eine induktive Energie aus der Induktionsheizeinheit auf das Positionierungselement übertragen werden, wodurch insbesondere Energiekosten reduziert werden können. Zudem ist eine Kommunikation des Positionierungselements mit der Induktionsheizeinheit mittels eines induktiven Signals vorteilhaft verbessert.

Zu einer verbesserten Positionierung der Aufstelleinheit, insbesondere der Unterlegeinheit und des Kochgeschirrelements und der Gehäuseeinheit, wird in einer bevorzugten Ausgestaltung der Erfindung vorteilhaft vorgeschlagen, dass die Positionierungseinheit wenigstens ein der Induktionsheizeinheit zugeordnetes und zu dem Positionierungselement korrespondierendes weiteres Positionierungselement aufweist, welches dazu vorgesehen ist, zu der Unterstützung der Positionierung der Aufstelleinheit, insbesondere der Unterlegeinheit und/oder des Kochgeschirrelements und/oder der Gehäuseeinheit, relativ zu der Induktionsheizeinheit mit dem Positionierungselement zusammenzuwirken. Dadurch kann insbesondere eine Positionierung der Aufstelleinheit, insbesondere der Unterlegeinheit und/oder des Kochgeschirrelements und/oder der Gehäuseeinheit, relativ zu der Induktionsheizeinheit und eine Erkennung der Positionierung verbessert werden und eine Kompatibilität der Positionierungseinheit erhöht werden. Insbesondere ist das weitere Positionierungselement in der Induktionsheizeinheit zumindest teilweise, vorteilhaft vollständig integriert.

Zudem wird vorgeschlagen, dass die Induktionsheizeinheit wenigstens ein Induktionsheizelement, insbesondere eine Heizspule, aufweist, mit welchem das weitere Positionierungselement zumindest teilweise einstückig ausgebildet ist. Unter "zumindest teilweise einstückig" soll in diesem Zusammenhang insbesondere verstanden werden, dass zumindest ein Bauteil zumindest eines Objekts, insbesondere das Induktionsheizelement, einstückig mit zumindest einem Bauteil zumindest eines weiteren Objekts, insbesondere dem weiteren Positionierungselement, einstückig ausgebildet ist. Insbesondere ist das weitere Positionierungselement zumindest teilweise als Induktionsheizelement ausgebildet. Vorteilhaft sind das Positionierungselement und das Induktionsheizelement identisch. Dadurch kann vorteilhaft ein bauraumsparendes weiteres Positionierungselement erreicht und Material- und/oder Herstellungskosten reduziert werden.

Zu einer verbesserten Positionierung durch die Positionierungseinheit wird vorgeschlagen, dass das Positionierungselement dazu vorgesehen ist, mit dem weiteren Positionierungselement zur Unterstützung der Positionierung induktiv zu koppeln. Dadurch kann insbesondere eine Übertragung eines insbesondere induktiven Signals, insbesondere eines magnetischen Felds, und ein Betrieb zur Positionierungsunterstützung vorteilhaft verbessert werden. Insbesondere soll unter "induktiv gekoppelt" in diesem Zusammenhang insbesondere verstanden werden, dass ein induktives Signal eines ersten Objekts, insbesondere ein magnetisches Feld des weiteren Positionierungselements, in dem Positionierungselement einen elektrischen Strom, insbesondere einen Induktionsstrom, und/oder eine elektrische Spannung, insbesondere eine Induktionsspannung, induziert. Insbesondere ist das weitere Positionierungselement dazu vorgesehen, ein induktives Signal, insbesondere ein magnetisches Feld, zu erzeugen, welches in dem Positionierungselement eine Spannung und/oder einen Strom induziert, wobei die induzierte Spannung und/oder der induzierte Strom mit dem induktiven Parameter, insbesondere dem zuvor bereits erwähnten induktiven Leitwert, des Positionierungselements korreliert sind. Alternativ könnte jedoch auch ein induktives Signal, insbesondere ein magnetisches Feld, in dem Positionierungselement einen Strom und/oder eine Spannung in dem weiteren Positionierungselement induzieren.

Zudem wird vorgeschlagen, dass das Kochsystem eine Positionsanzeigeeinheit aufweist, welche zur Anzeige der Positionierung anhand einer Größe eines induktiven, insbesondere des zuvor bereits eingeführten Parameters des Positionierungselements vorgesehen ist. Insbesondere weist die Positionsanzeigeeinheit zumindest ein Positionsanzeigeelement auf, welches insbesondere mittels einer analogen Anzeige und insbesondere mittels eines Display-Anzeigeelements und/oder eines LED-Anzeigeelements eine Position beispielsweise durch die Anzeige einer Leistung anhand eines Betrags des induktiven Parameters in einer, zum Betrag des induktiven Parameters korrespondierenden LED-Reihe und/oder einer Richtungsanzeige oder einer Positionsanzeige, in welcher eine Heizleistung farblich kodiert in einer zweidimensionalen Darstellung im Bereich der Positionierungseinheit, insbesondere der Aufstelleinheit, vorteilhaft der Unterlegeinheit und/oder des Kochgeschirrelements und/oder der Gehäuseeinheit, anzeigt. Insbesondere ist der induktive Parameter korreliert mit dem zuvor bereits eingeführten induktiven Leitwert, insbesondere mit der Induktionsspannung. Insbesondere weist das Kochsystem zusätzlich eine Messeinheit mit zumindest einem Messelement auf, welches insbesondere dazu vorgesehen ist, den induktiven Parameter, insbesondere die Induktionsspannung, des Positionierungselements zu messen. Insbesondere ist jedem Positionierungselement zumindest ein Messelement zugeordnet, welches jeweils insbesondere als ein Messschaltkreis ausgebildet ist. Insbesondere ist die Positionsanzeigeeinheit zu einer Anzeige der Positionierung insbesondere des Positionierungselements relativ zu der Induktionsheizeinheit, insbesondere zu dem weiteren Positionierungselement der Positionierungseinheit, insbesondere mittels des induktiven Leitwerts, vorgesehen und insbesondere als analoge Anzeige, als Display-Anzeige und/oder vorzugsweise als LED-Anzeige ausgebildet und insbesondere an der Aufstelleinheit, insbesondere an der Unterlegeinheit und/oder an dem Kochgeschirrelement und/oder an der Gehäuseeinheit, angeordnet, insbesondere in die Aufstelleinheit, insbesondere in die Unterlegeinheit und/oder in das Kochgeschirrelement und/oder in die Gehäuseeinheit, zumindest teilweise integriert. Dadurch kann eine Positionierung insbesondere durch einen Benutzer ausgeführt und damit vorteilhaft ein Bedienkomfort erhöht werden.

Um vorteilhaft eine Flexibilität der Aufstelleinheit verbesserte, insbesondere genauere, Positionierung zu erreichen, umfasst die Positionierungseinheit eine Mehrzahl an Positionierungselementen, welche der Aufstelleinheit zugeordnet ist und zumindest im Wesentlichen und vorzugsweise vollständig baugleich zu dem Positionierungselement ausgebildet sind.

Insbesondere sind das zumindest eine Positionierungselement und ein weiteres Positionierungselement induktiv gekoppelt. Insbesondere sind eine Mehrzahl von Positionierungselementen und ein Mehrzahl von weiteren Positionierungselementen induktiv gekoppelt. Unter "zumindest im Wesentlichen baugleich" soll in diesem Zusammenhang insbesondere verstanden werden, dass sich eines der Positionierungselemente hinsichtlich einer Außenform und/oder eines kleinsten, die Außenform umfassenden Volumens um höchstens 30 %, vorteilhaft um höchstens 20 %, bevorzugt um höchstens 10 % und besonders vorteilhaft um höchstens 5 % sowie hinsichtlich einer Masse um höchstens 30 %, vorteilhaft um höchstens 20 %, bevorzugt um höchstens 10 % und besonders vorteilhaft um höchstens 5 % von den Positionierungselementen unterscheidet.

Für eine verbesserte Positionierung und einen vorteilhaft verbesserten Bedienkomfort könnte die Aufstelleinheit ein Kochgeschirrelement aufweisen, wobei die Positionierungseinheit zu einer Unterstützung einer Positionierung des Kochgeschirrelements relativ zu einer Unterlegeinheit der Aufstelleinheit und der Induktionsheizeinheit vorgesehen ist. Insbesondere ist die Positionierung des Kochgeschirrelements relativ zu der Unterlegeinheit mittels einer zusätzlichen Bestimmung eines weiteren induktiven Parameters, welcher eine Änderung der Spannung und/oder des Stroms durch eine relative Positionierung der Unterlegeinheit zum Kochgeschirrelement bewirkt. Insbesondere korreliert der weitere induktive Parameter mit dem induktiven Leitwert und hat einen insbesondere vom induktiven Parameter verschiedenen Wert.

Die Aufstelleinheit weist zumindest eine Gehäuseeinheit auf, in welcher das Positionierungselement zumindest teilweise und vorteilhaft wenigstens zu einem Großteil integriert ist. Dadurch kann insbesondere eine geringe Bauteilevielfalt und/oder eine geringe Lagerhaltung und/oder eine unkomplizierte Ausgestaltung erzielt werden. Die Gehäuseeinheit könnte beispielsweise mehrteilig ausgebildet sein, wobei insbesondere Teilbereiche der Gehäuseeinheit in dem Heizbetriebszustand miteinander insbesondere lösbar verbunden sein könnten. Hierdurch könnte insbesondere im Fall eines Defekts ein Zugriff auf zumindest ein in der Gehäuseeinheit integriertes Objekt ermöglicht werden. Alternativ könnte die Gehäuseeinheit einstückig ausgebildet sein, wodurch insbesondere eine hohe Stabilität erzielt werden könnte. Unter "einstückig" soll insbesondere zumindest stoffschlüssig verbunden verstanden werden, beispielsweise durch einen Schweißprozess, einen Klebeprozess, einen Anspritzprozess und/oder einen anderen, dem Fachmann als sinnvoll erscheinenden Prozess, und/oder vorteilhaft in einem Stück geformt verstanden werden, wie beispielsweise durch eine Herstellung aus einem Guss und/oder durch eine Herstellung in einem Ein- oder Mehrkomponentenspritzverfahren und vorteilhaft aus einem einzelnen Rohling.

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination.

Es zeigen:
- Fig. 1: ein nicht erfindungsgemäßes Kochsystem mit einem Kochfeld, mit einer Aufstelleinheit, welche eine Unterlegeeinheit und ein Kochgeschirrelement aufweist, und einer Positionierungseinheit in einer schematischen Darstellung,
- Fig. 2: die Unterlegeinheit mit einer Mehrzahl an Positionierungselementen,
- Fig. 3: eine schematische Abbildung einer Übertragung an induktiver Energie von einer Induktionsheizeinheit auf ein Positionierungselement und
- Fig. 4: ein erfindungsgemäßes Kochsystem umfassend eine Aufstelleinheit, welche eine Gehäuseeinheit aufweist, ein Kochfeld und eine Positionierungseinheit in einer schematischen Darstellung.

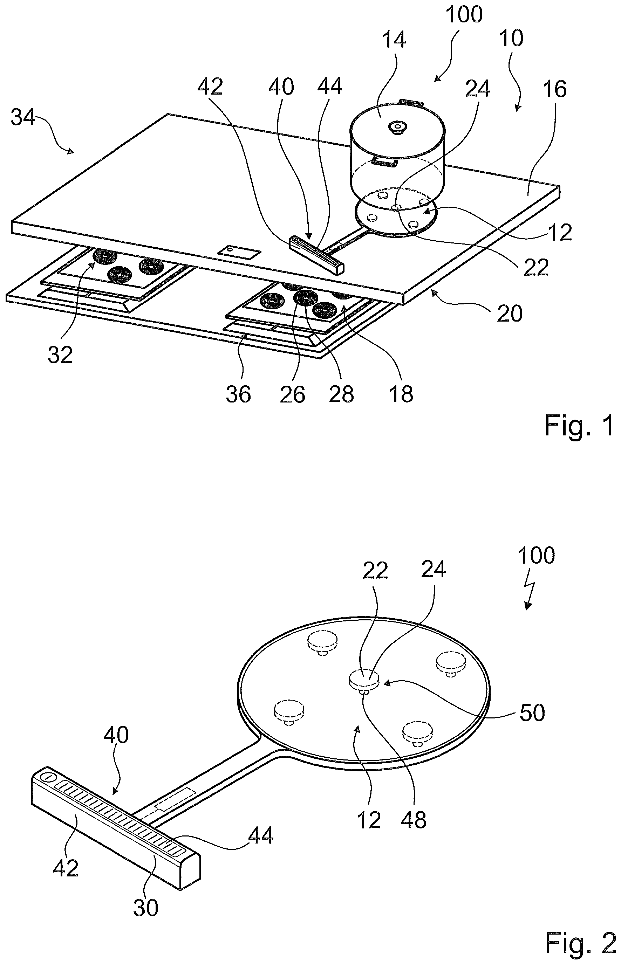

Figur 1 zeigt ein Kochsystem 10 mit einem Kochfeld 34. Das Kochsystem 10 weist eine Aufstelleinheit 100 auf. Im vorliegenden nicht erfindungsgemäßen Ausführungsbeispiel weist die Aufstelleinheit 100 eine Unterlegeinheit 12 auf. Die Unterlegeinheit 12 ist Teil des Kochsystems 10. Die Aufstelleinheit 100 weist ein Kochgeschirrelement 14 auf. Das Kochgeschirrelement 14 ist Teil des Kochsystems 10.

Das Kochsystem 10 weist eine Abdeckplatte 16 auf. In einem montierten Zustand ist das Kochfeld 34 unterhalb der Abdeckplatte 16 angeordnet. Das Kochfeld 34 ist im vorliegenden Fall frei von einer Kochfeldplatte. Die Abdeckplatte 16 ist verschieden von einer Kochfeldplatte ausgebildet. Die Abdeckplatte 16 ist als Küchenarbeitsplatte ausgebildet. Alternativ oder zusätzlich kann ein Kochfeld eine Kochfeldplatte aufweisen, wobei eine Abdeckplatte zumindest teilweise einstückig mit der Kochfeldplatte ausgebildet und/oder vollständig als Kochfeldplatte ausgebildet sein kann.

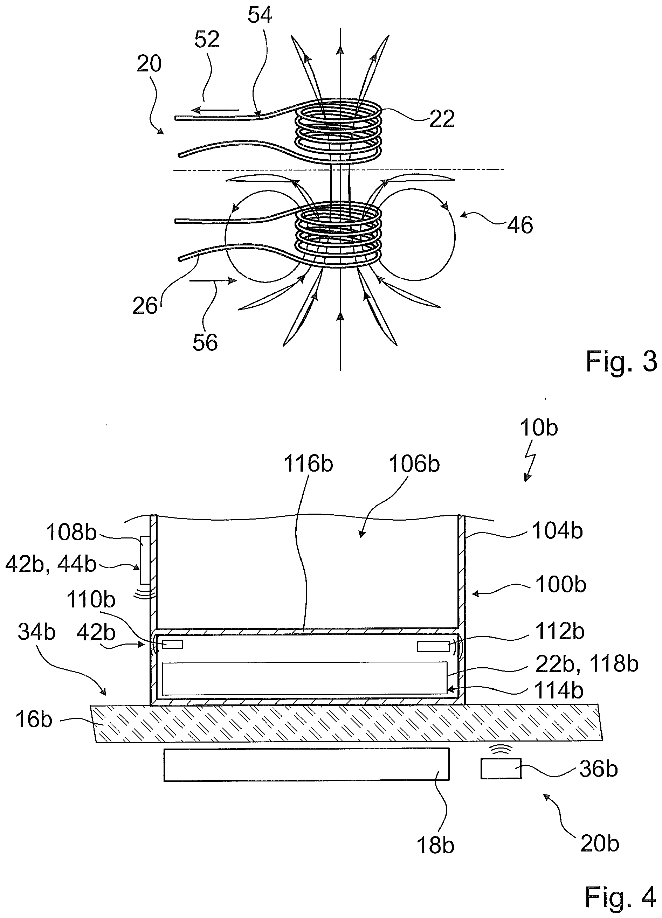

Das Kochfeld 34 weist zumindest eine Induktionsheizeinheit 18 auf. Die Induktionsheizeinheit 18 umfasst ein Induktionsheizelement 28. Das Induktionsheizelement 28 ist zu einer Bereitstellung von induktiver Energie vorgesehen. Das Induktionsheizelement 28 ist zu einer Erhitzung eines Teils der Aufstelleinheit 100 vorgesehen. Im vorliegenden Ausführungsbeispiel ist das Induktionsheizelement 28 zu einer Erhitzung eines Kochgeschirrelements 14 der Aufstelleinheit 100 vorgesehen. Das Induktionsheizelement 28 ist zu einer Übertragung von induktiver Energie an den Teil der Aufstelleinheit 100, insbesondere an das Kochgeschirrelement 14, vorgesehen. Das Induktionsheizelement 28 ist als Induktionsspule ausgebildet. Die Induktive Energie wird mittels eines magnetischen Felds 46 übertragen (vgl. Figur 3). Das magnetische Feld 46 erzeugt in dem Teil der Aufstelleinheit 100, insbesondere in dem Kochgeschirrelement 14, eine Wärmeenergie zur Erhitzung des Teils der Aufstelleinheit 100, insbesondere des Kochgeschirrelements 14. Zudem umfasst die Induktionsheizeinheit 18 eine Mehrzahl an weiteren Induktionsheizelementen, welche baugleich zu dem Induktionsheizelement 28 ausgebildet sind. Zusätzlich weist das Kochfeld 34 eine weitere Induktionsheizeinheit 32 auf. Die Induktionsheizeinheit 18 und die weitere Induktionsheizeinheit 32 sind baugleich ausgebildet. Eine Beschreibung der Induktionsheizeinheit 18 kann auf die weitere Induktionsheizeinheit 32 übertragen werden.

Ein Oberflächenbereich der Abdeckplatte 16, unterhalb welcher das Kochfeld 34 angeordnet ist, definiert einen Kochbereich. Zusätzlich kann ein Kochfeld weitere Induktionsheizeinheiten umfassen. Die Abdeckplatte 16 ist zu einem Aufstellen der Aufstelleinheit 100 vorgesehen. Im vorliegenden Ausführungsbeispiel ist die Abdeckplatte 16 zu einem Aufstellen der Unterlegeinheit 12 vorgesehen. In dem Heizbetriebszustand ist die Unterlegeinheit 12 zwischen der Abdeckplatte 16 und dem Kochgeschirrelement 14 angeordnet.

Das Kochfeld 34 umfasst eine Steuereinheit 36. Die Steuereinheit 36 ist unterhalb der Abdeckplatte 16 angeordnet. Im vorliegenden Fall ist die Steuereinheit 36 unterhalb der Induktionsheizeinheit 18 angeordnet. Die Steuereinheit 36 regelt in zumindest einem Heizbetriebszustand des Kochfelds 34 eine Energiezufuhr zu den Induktionsheizeinheiten 18, 32. Alternativ kann eine Steuereinheit zu einer Induktionsheizeinheit auch horizontal versetzt angeordnet sein.

Die Unterlegeinheit 12 verhindert in dem Heizbetriebszustand im Wesentlichen eine Übertragung von Wärme von dem Kochgeschirrelement 14 auf die Abdeckplatte 16. Die Unterlegeinheit 12 weist eine im Wesentlichen scheibenförmige Gestalt auf. Im vorliegenden Ausführungsbeispiel weist die Unterlegeinheit 12 einen Durchmesser von im Wesentlichen 180 mm auf. Die Unterlegeinheit 12 weist eine Dicke von im Wesentlichen 2 mm auf.

Die Unterlegeinheit 12 besteht zu einem Großteil aus einem im Wesentlichen flexiblen Material. Das Material, aus welchem die Unterlegeinheit 12 zu einem Großteil besteht, weist eine geringe Wärmeleitfähigkeit auf. Insbesondere ist das Material, aus welchem die Unterlegeinheit 12 zu einem Großteil besteht, im Wesentlichen isolierend und/oder im Wesentlichen einfach zu reinigen. Im vorliegenden Ausführungsbeispiel besteht die Unterlegeinheit 12 zu einem Großteil aus Silikon. Alternativ kann eine Unterlegeinheit aus einem elastischen Plastik bestehen und eine Dicke von mehr als 2 mm oder weniger als 2 mm aufweisen.

Die Aufstelleinheit 100 weist eine Elektronikeinheit 40 auf, wie die Detailansicht der Unterlegeinheit 12 in Figur 2 zeigt. Im vorliegenden nicht erfindungsgemäßen Ausführungsbeispiel weist die Unterlegeinheit 12 die Elektronikeinheit 40 auf. Die Elektronikeinheit 40 stellt in einem Betriebszustand zumindest eine Funktion bereit. Vor einem Beginn des Heizbetriebszustands stellt die Elektronikeinheit 40 in dem Betriebszustand mehrere Funktionen bereit. Die Elektronikeinheit 40 ist zu einer Sensorfunktion, beispielweise von Kochgeschirrparametern wie Temperatur, Kochdauer, Kochgeschirrgewicht, und/oder zu einer Anzeigen- und Bedienungsfunktion mittels einer Bedieneinheit 42 und einer Anzeigeeinheit 44 vorgesehen.

Im vorliegenden Fall weist das Kochsystem 10 eine Positionierungseinheit 20 auf. Die Positionierungseinheit 20 ist teilweise in der Aufstelleinheit 100 angeordnet und/oder durch diese gebildet. Im vorliegenden Ausführungsbeispiel ist die Positionierungseinheit 20 teilweise in der Unterlegeinheit 12 angeordnet und/oder durch diese gebildet. Die Positionierungseinheit 20 ist teilweise in der Induktionsheizeinheit 18 angeordnet und/oder durch diese gebildet. Die Positionierungseinheit 20 ist zu einer Unterstützung einer Positionierung der Aufstelleinheit 100, insbesondere der Unterlegeinheit 12, relativ zu der Induktionsheizeinheit 18 vorgesehen. Die Positionierungseinheit 20 ist zu einer Unterstützung einer Positionierung des Kochgeschirrelements 14 relativ zu der Unterlegeinheit 12 und der Induktionsheizeinheit 18 vorgesehen. Die Positionierungseinheit 20 weist ein Positionierungselement 22 auf. Das Positionierungselement 22 ist der Aufstelleinheit 100, insbesondere der Unterlegeinheit 12, zugeordnet. Das Positionierungselement 22 ist in die Aufstelleinheit 100, insbesondere in die Unterlegeinheit 12, integriert. Das Positionierungselement 22 ist in der Aufstelleinheit, insbesondere in der Unterlegeinheit 12, angeordnet. Das Positionierungselement 22 ist dazu vorgesehen, zumindest teilweise zu der Unterstützung der Positionierung der Aufstelleinheit 100, insbesondere der Unterlegeinheit 12, relativ zu der Induktionsheizeinheit 18 beizutragen. Das Positionierungselement 22 ist als ein induktives Element 24 ausgebildet. Das Positionierungselement 22 ist als eine Spule ausgebildet.

Die Positionierungseinheit 20 umfasst eine Mehrzahl an zusätzlichen Positionierungselementen. Die zusätzlichen Positionierungselemente sind der Aufstelleinheit 100, insbesondere der Unterlegeinheit 12, zugeordnet. Die zusätzlichen Positionierungselemente sind in die Aufstelleinheit 100, insbesondere in die Unterlegeinheit 12, integriert. Die zusätzlichen Positionierungselemente sind in der Aufstelleinheit 100, insbesondere in der Unterlegeinheit 12, angeordnet. Die zusätzlichen Positionierungselemente sind als induktive Elemente ausgebildet. Die zusätzlichen Positionierungselemente sind als Spulen ausgebildet. Die zusätzlichen Positionierungselemente sind baugleich zu dem Positionierungselement 22 ausgebildet. Im vorliegenden Fall umfasst die Unterlegeinheit 12 fünf Positionierungselemente. Die Positionierungselemente sind im vorliegenden Fall konzentrisch und regelmäßig über die Unterlegeinheit 12 verteilt.

Alternativ können Positionierungselemente auch verschieden ausgebildet sein, beispielsweise in einer Zahl der Spulenwindungen oder eines Spulendurchmessers oder einer Spulenumrissform. Beispielsweise können Positionierungselemente konzentrisch angeordnet und/oder konzentrisch zu einer Aufstelleinheit, insbesondere zu einer Unterlegeinheit, gefertigt sein. Es ist auch möglich, die Positionierungselemente unregelmäßig in einer Aufstelleinheit, insbesondere in einer Unterlegeinheit anzuordnen. Alternativ kann eine Aufstelleinheit, insbesondere eine Unterlegeinheit, nur ein Positionierungselement aufweisen.

Die Positionierungseinheit 20 weist ein weiteres Positionierungselement 26 auf. Das weitere Positionierungselement 26 ist der Induktionsheizeinheit 18 zugeordnet. Das weitere Positionierungselement 26 ist in der Induktionsheizeinheit 18 angeordnet und/oder durch diese gebildet. Das weitere Positionierungselement 26 ist als ein weiteres induktives Element ausgebildet. Das weitere Positionierungselement 26 ist einstückig mit dem Induktionsheizelement 28 ausgebildet. Das weitere Positionierungselement 26 ist als Spule ausgebildet. Das weitere Positionierungselement 26 ist als ein zu dem Positionierungselement 22 korrespondierendes weiteres Positionierungselement ausgebildet. Das weitere Positionierungselement 26 ist korrespondierend zu den zusätzlichen Positionierungselementen ausgebildet. Das weitere Positionierungselement 26 ist dazu vorgesehen, zu einer Positionierung der Aufstelleinheit 100, insbesondere der Unterlegeinheit 12, relativ zu der Induktionsheizeinheit 18 mit dem Positionierungselement 22 zusammenzuwirken. Das weitere Positionierungselement 26 ist dazu vorgesehen, ein magnetisches Feld 46 bereitzustellen. Das weitere Positionierungselement 26 ist dazu vorgesehen, mittels eines angelegten elektrischen Stroms 56 ein magnetisches Feld 46 zu erzeugen. Das weitere Positionierungselement 26 bildet mittels des durch das weitere Positionierungselement 26 fließenden, elektrischen Stroms 56 ein magnetisches Feld 46 aus. Das magnetische Feld 46 ist in einem geometrischen Zentrum des weiteren Positionierungselements 26 stärker als an den Rändern des weiteren Positionierungselements 26. Das weitere Positionierungselement 26 ist dazu vorgesehen, zu der Unterstützung der Positionierung der Aufstelleinheit 100, insbesondere der Unterlegeinheit 12, relativ zu der Induktionsheizeinheit 18 mit den zusätzlichen Positionierungselementen zusammenzuwirken.

Das Positionierungselement 22 und das weitere Positionierungselement 26 sind zur Unterstützung der Positionierung induktiv gekoppelt. Wie die schematische Darstellung einer induktiven Kopplung in Figur 3 zeigt, ist das Positionierungselement 22 an ein magnetisches Feld 46 des weiteren Positionierungselements 26 gekoppelt. Das magnetische Feld 46 des weiteren Positionierungselements 26 durchsetzt das Positionierungselement 22. Das magnetische Feld 46 induziert in dem Positionierungselement 22 einen elektrischen Strom. Das magnetische Feld 46 induziert in dem Positionierungselement 22 einen Induktionsstrom 52. Zusätzlich erzeugt das magnetische Feld 46 in dem Positionierungselement 22 eine elektrische Spannung. Das magnetische Feld 46 erzeugt in dem Positionierungselement 22 eine Induktionsspannung 54. Die Stärke des Induktionsstroms 52 in dem Positionierungselement 22 ist korreliert mit der Stärke des magnetischen Felds 46. Die Stärke des Induktionsstroms 52 in dem Positionierungselement 22 ist proportional zu der Stärke des magnetischen Felds 46. Die Stärke der Induktionsspannung 54 in dem Positionierungselement 22 ist korreliert mit der Stärke des magnetischen Felds 46. Der Induktionsstrom 52 und die Induktionsspannung 54 werden als elektrische Energie zu einer Energieversorgung der Elektronikeinheit 40 genutzt. Zudem bildet der Induktionsstrom 52 ein weiteres magnetisches Feld des Positionierungselements 22 aus. Zudem bilden der Induktionsstrom 52 und die Induktionsspannung 54 einen induktiven Leitwert des Positionierungselements 22 aus. Zudem induziert das weitere Positionierungselement 26 und die zusätzlichen weiteren Positionierungselemente jeweils eine zusätzliche Induktionsspannung in den zusätzlichen Positionierungselementen der Unterlegeinheit 12. Die Größen der jeweils zusätzlichen Induktionsspannungen sind abhängig von der Positionierung der zusätzlichen Positionierungselemente relativ zu den weiteren Positionierungselementen und können sich voneinander unterscheiden.

Die Aufstelleinheit 100, insbesondere die Unterlegeinheit 12, umfasst eine Messeinheit 48 (vgl. Figur 2). Die Messeinheit 48 ist dazu vorgesehen, die Induktionsspannung 54 des Positionierungselements 22 zu messen. Dazu weist die Messeinheit 48 ein Messelement 50 auf. Das Messelement 50 ist dem Positionierungselement 22 zugeordnet. Das Messelement 50 ist dazu vorgesehen die Induktionsspannung 54 des Positionierungselements 22 zu messen. Das Messelement 50 ist als ein Messschaltkreis ausgebildet. Das Messelement 50 ist auf das Positionierungselement 22 angepasst. Das Messelement 50 ist mit dem Positionierungselement 22 verbunden. Zudem weist die Messeinheit 48 eine Mehrzahl an zusätzlichen Messelementen auf. Jeweils eins der zusätzlichen Messelemente ist einem der zusätzlichen Positionierungselemente zugeordnet. Die zusätzlichen Messelemente sind jeweils dazu vorgesehen von jeweils einem der Positionierungselemente jeweils eine Induktionsspannung zu messen. Die zusätzlichen Messelemente sind jeweils als Messschaltkreis ausgebildet. Jeweils eins der zusätzlichen Messelemente ist auf jeweils eins der zusätzlichen Positionierungselemente angepasst. Jeweils eins der zusätzlichen Messelemente ist mit jeweils einem der zusätzlichen Positionierungselemente verbunden. Alternativ oder zusätzlich ist denkbar, dass eine Messeinheit zu einer Messung eines Induktionsstroms und/oder der induzierten magnetischen Felder der Positionierungselemente einer Aufstelleinheit, insbesondere einer Unterlegeinheit, vorgesehen ist.

Das Kochsystem 10 weist eine Positionsanzeigeeinheit 30 auf. Die Positionsanzeigeeinheit 30 ist zur Anzeige der Positionierung anhand einer Größe eines induktiven Parameters des Positionierungselements 22 vorgesehen. Die Positionsanzeigeeinheit 30 ist zur Anzeige der Positionierung anhand einer Größe der Induktionsspannung 54 des Positionierungselements 22 vorgesehen. Die Positionsanzeigeeinheit 30 ist zur Anzeige der Positionierung anhand der Größe der zusätzlichen Induktionsspannung der zusätzlichen Positionierungselemente vorgesehen. Die Positionsanzeigeeinheit 30 ist im vorliegenden Fall bevorzugt als LED-Anzeige ausgebildet. Die Positionsanzeigeeinheit 30 zeigt eine Positionierung des Positionierungselements 22 mittels der Induktionsspannung 54 und des zusätzlichen Positionierungselements mittels der zusätzlichen Induktionsspannungen an. Die Positionsanzeigeeinheit 30 zeigt eine Positionierung der Aufstelleinheit 100, insbesondere der Unterlegeinheit 12, mittels der Induktionsspannung 54 und der zusätzlichen Induktionsspannungen an. Im vorliegenden Fall ist die Positionsanzeigeeinheit 30 in die Aufstelleinheit 100, insbesondere die Unterlegeinheit 12, integriert. Im vorliegenden Fall ist die Positionsanzeigeeinheit 30 in die Anzeigeeinheit 44 integriert. Alternativ könnte die Positionsanzeigeeinheit auch in eine Abdeckplatte integriert sein und mittels eines in eine Aufstelleinheit, insbesondere in eine Unterlegeinheit, integrierten Signalsenders kommunizieren. Im vorliegenden Fall ist die Positionsanzeigeeinheit 30 als LED-Anzeige ausgebildet und zeigt die Position der Aufstelleinheit 100, insbesondere der Unterlegeinheit 12, beispielsweise mittels einer LED Reihe und/oder einer digitalen Leistungsanzeige im Zahlenformat an, indem ein zu der Induktionsspannung 54 und der zusätzlichen Induktionsspannung korrespondierender Heizleistungswert als ein Wert mittels der LED-Reihe und/oder einer Prozentangabe angezeigt wird. Alternativ oder zusätzlich könnte eine Positionsanzeigeeinheit eine Richtungsanzeige in Form von zueinander ausgerichteten Pfeilen anzeigen, welche die Richtung einer Position mit einem höheren Heizleistungswert anzeigen. Alternativ könnte eine Positionsanzeigeeinheit als ein Display ausgebildet sein, welches Heizleistungswerte beispielsweise über einen Ausschnitt und/oder einen ganzen Auflagebereich einer Aufstelleinheit, insbesondere einer Unterlegeinheit, kodiert farblich anzeigt und/oder eine Richtung zu einer Position mit einem höheren Heizleistungswert anzeigt. In Figur 4 ist ein erfindungsgemäßes Ausführungsbeispiel der Erfindung gezeigt. Die nachfolgenden Beschreibungen beschränken sich im Wesentlichen auf die Unterschiede zwischen den Ausführungsbeispielen, wobei bezüglich gleich bleibender Bauteile, Merkmale und Funktionen auf die Beschreibung des nicht erfindungsgemäßen Ausführungsbeispiels der Figuren 1 bis 3 verwiesen werden kann. Zur Unterscheidung der Ausführungsbeispiele ist den Bezugszeichen des Ausführungsbeispiels in den Figuren 1 bis 3 in dem Ausführungsbeispiel der Figur 4 der Buchstabe b nachgestellt. Bezüglich gleich bezeichneter Bauteile, insbesondere in Bezug auf Bauteile mit gleichen Bezugszeichen, kann grundsätzlich auch auf die Zeichnungen und/oder die Beschreibung des Ausführungsbeispiels der Figuren 1 bis 3 verwiesen werden.

Figur 4 zeigt ein erfindungsgemäßes Kochsystem 10b mit einem Kochfeld 34b. Das Kochsystem 10b weist eine Aufstelleinheit 100b auf. Im vorliegenden erfindungsgemäßen Ausführungsbeispiel weist die Aufstelleinheit 100b eine Gehäuseeinheit 104b auf. Die Gehäuseeinheit 104b definiert einen Aufnahmeraum 106b zu einer Aufnahme von Lebensmitteln, insbesondere zum Zweck einer Garung der Lebensmittel.

Ein Positionierungselement 22b einer Positionierungseinheit 20b des Kochsystems 10b ist teilweise in der Gehäuseeinheit 104b integriert. Eine Bedieneinheit 42b des Kochsystems 10b ist teilweise in der Gehäuseeinheit 104b integriert. Die Bedieneinheit 42b weist ein Bedienelement 108b auf, welches zu einer Betätigung durch einen Bediener vorgesehen ist. Das Bedienelement 108b ist in einem Heizbetriebszustand an der Gehäuseeinheit 104b befestigt. Die Bedieneinheit 42b weist eine Bedienelektronik 110b auf, welche zu einer Bearbeitung eines von dem Bedienelement empfangenen Signals vorgesehen ist. In dem Betriebszustand kommunizieren das Bedienelement 108b und die Bedienelektronik 110b insbesondere drahtlos miteinander. Die Bedienelektronik 110b ist in der Gehäuseeinheit 104b integriert. Das Kochsystem 10b weist eine Anzeigeeinheit 44b auf, welche teilweise einstückig mit der Bedieneinheit 42b ausgebildet ist.

Das Kochsystem 10b weist eine Sendeeinheit 112b auf. Die Sendeeinheit 112b ist in der Gehäuseeinheit 104b integriert. Die Sendeeinheit 112b ist zu einer Kommunikation mit der Positionierungseinheit 20b des Kochsystems 10b und/oder mit einer Steuereinheit 36b des Kochsystems 10b, welche insbesondere in dem Kochfeld 34b integriert ist, vorgesehen. Im vorliegenden Ausführungsbeispiel sind die Steuereinheit 36b und die Positionierungseinheit 20b teilweise einstückig ausgebildet. Insbesondere ist die Steuereinheit 36b Teil der Positionierungseinheit 20b. Eine Induktionsheizeinheit 18b des Kochsystems 10b ist Teil der Positionierungseinheit 20b.

In dem Heizbetriebszustand stellt die Induktionsheizeinheit 18b induktiv Energie für die Aufstelleinheit 100b bereit. Im vorliegenden Ausführungsbeispiel weist die Aufstelleinheit 100b eine Aufnahmeinduktionseinheit 114b auf, welche zu einem Empfang zumindest eines Teils der von der Induktionsheizeinheit 18b induktiv bereitgestellten Energie vorgesehen ist. Die Aufnahmeinduktionseinheit 114b weist ein Aufnahmeinduktionselement 114b auf. Das Aufnahmeinduktionselement 114b ist als eine Spule ausgebildet. In dem Heizbetriebszustand ist die Aufnahmeinduktionseinheit 114b zu einer Versorgung zumindest einer Elektronikeinheit 40b und/oder einer Bedieneinheit 42b und/oder einer Anzeigeeinheit 44b und/oder einer Messeinheit 48b und/oder der Sendeeinheit 112b mit Energie vorgesehen.

Die Induktionsheizeinheit 18b beheizt mittels der Energie in dem Heizbetriebszustand eine den Aufnahmeraum 106b begrenzende Wandung 116b der Gehäuseeinheit 104b. In dem Heizbetriebszustand überträgt die Induktionsheizeinheit 18b einen Teil der bereitgestellten Energie an die Wandung 116b der Gehäuseeinheit 104b und einen Teil der Energie an die Aufnahmeinduktionseinheit 114b.

### Bezugszeichen

- 10: Kochsystem
- 12: Unterlegeinheit
- 14: Kochgeschirrelement
- 16: Abdeckplatte
- 18: Induktionsheizeinheit
- 20: Positionierungseinheit
- 22: Positionierungselement
- 24: induktives Element
- 26: Positionierungselement
- 28: Induktionsheizelement
- 30: Positionsanzeigeeinheit
- 32: Induktionsheizeinheit
- 34: Kochfeld
- 36: Steuereinheit
- 40: Elektronikeinheit
- 42: Bedieneinheit
- 44: Anzeigeeinheit
- 46: Magnetisches Feld
- 48: Messeinheit
- 50: Messelement
- 52: Induktionsstrom
- 54: Induktionsspannung
- 56: elektrischer Strom
- 100: Aufstelleinheit
- 104: Gehäuseeinheit
- 106: Aufnahmeraum
- 108: Bedienelement
- 110: Bedienelektronik
- 112: Sendeeinheit
- 114: Aufnahmeinduktionseinheit
- 116: Wandung
- 118: Aufnahmeinduktionselement

## Patentansprüche

1. Kochsystem (10b) mit zumindest einer Aufstelleinheit (100b), welche in wenigstens einem Heizbetriebszustand zu einer Anordnung oberhalb einer Abdeckplatte (16b) vorgesehen ist, mit einer Induktionsheizeinheit (18b), welche zu einer Erhitzung zumindest eines Teils der Aufstelleinheit (100b) vorgesehen ist, und mit einer Positionierungseinheit (20b), welche zu einer Unterstützung einer Positionierung der Aufstelleinheit (100b) relativ zu der Induktionsheizeinheit (18b) vorgesehen ist, wobei die Positionierungseinheit (20b) wenigstens ein der Aufstelleinheit (100b) zugeordnetes Positionierungselement (22b) aufweist, welches als induktives Element (118b) ausgebildet und dazu vorgesehen ist, zumindest teilweise zu der Unterstützung der Positionierung der Aufstelleinheit (100b) relativ zu der Induktionsheizeinheit (18b) beizutragen, und wobei das Positionierungselement (22b) zumindest teilweise in der Aufstelleinheit (100b) integriert ist, wobei die Aufstelleinheit (100b) zumindest eine Gehäuseeinheit (104b) aufweist, welche als eine Außengehäuseeinheit ausgebildet ist und ein Außengehäuse der Aufstelleinheit (100b) wenigstens zu einem Großteil ausbildet, wobei die Gehäuseeinheit (104b) einen Aufnahmeraum (106b) zu einer Aufnahme von Lebensmitteln definiert, wobei die Positionierungseinheit (20b) zumindest teilweise in der Gehäuseeinheit (104b) integriert ist, **dadurch gekennzeichnet, dass** die Positionierungseinheit (20b) eine Mehrzahl an Positionierungselementen (22b) umfasst, welche der Aufstelleinheit (100b) zugeordnet und zumindest im Wesentlichen baugleich zu dem Positionierungselement (22b) ausgebildet sind.

2. Kochsystem (10b) nach Anspruch 1, **dadurch gekennzeichnet, dass** das Positionierungselement (22b) als eine Spule ausgebildet ist.

3. Kochsystem (10b) nach einem der vorhergehenden Ansprüche, **dadurch gekennzeichnet, dass** die Positionierungseinheit (20b) wenigstens ein der Induktionsheizeinheit (18b) zugeordnetes und zu dem Positionierungselement (22b) korrespondierendes weiteres Positionierungselement (26b) aufweist, welches dazu vorgesehen ist, zu der Unterstützung der Positionierung der Aufstelleinheit (100b) relativ zu der Induktionsheizeinheit (18b) mit dem Positionierungselement (22b) zusammenzuwirken.

4. Kochsystem (10b) nach Anspruch 3, **dadurch gekennzeichnet, dass** die Induktionsheizeinheit (18b) wenigstens ein Induktionsheizelement (28b) aufweist, mit welchem das weitere Positionierungselement (26b) einstückig ausgebildet ist.

5. Kochsystem (10b) nach einem der vorhergehenden Ansprüche, **dadurch gekennzeichnet, dass** das Positionierungselement (22b) dazu vorgesehen ist, mit dem weiteren Positionierungselement (26b) zur Unterstützung der Positionierung induktiv zu koppeln.

6. Kochsystem (10b) nach einem der vorhergehenden Ansprüche, **gekennzeichnet durch eine** Positionsanzeigeeinheit (30b), welche zur Anzeige der Positionierung anhand einer Größe eines induktiven Parameters des Positionierungselements (22b) vorgesehen ist.

## Claims

1. Cooking system (10b) with at least one installation unit (100b), which, in at least one heating operating state, is provided for arrangement above a cover plate (16b), with an induction heating unit (18b) which is provided for heating at least one part of the installation unit (100b), and with a positioning unit (20b) which is provided to assist with a positioning of the installation unit (100b) relative to the induction heating unit (18b), wherein the positioning unit (20b) has at least one positioning element (22b) which is assigned to the installation unit (100b) and which is embodied as an inductive element (118b) and is provided to contribute at least partially to assist with the positioning of the installation unit (100b) relative to the induction heating unit (18b), and wherein the positioning element (22b) is integrated at least partially in the installation unit (100b), wherein the installation unit (100b) has at least one housing unit (104b), which is embodied as an external housing unit and embodies an external housing of the installation unit (100b) at least to a large extent, wherein the housing unit (104b) defines a receiving space (106b) for receiving groceries, wherein the positioning unit (20b) is integrated at least partially in the housing unit (104b), **characterised in that** the positioning unit (20b) comprises a plurality of positioning elements (22b) which are assigned to the installation unit (100b) and are embodied at least substantially identical in construction to the positioning element (22b).

2. Cooking system (10b) according to claim 1, **characterised in that** the positioning element (22b) is embodied as a coil.

3. Cooking system (10b) according to one of the preceding claims, **characterised in that** the positioning unit (20b) has at least one further positioning element (26b) which is assigned to the induction heating unit (18b) and corresponds to the positioning element (22b) and which, in order to assist with the positioning of the installation unit (100b) relative to the induction heating unit (18b), is provided to cooperate with the positioning element (22b).

4. Cooking system (10b) according to claim 3, **characterised in that** the induction heating unit (18b) has at least one induction heating element (28b), with which the further positioning element (26b) is embodied in one piece.

5. Cooking system (10b) according to one of the preceding claims, **characterised in that** the positioning element (22b) is provided to inductively couple with the further positioning element (26b) to assist with the positioning.

6. Cooking system (10b) according to one of the preceding claims, **characterised by** a positioning display unit (30b) which is provided to display the positioning on the basis of a value of an inductive parameter of the positioning element (22b).

## Revendications

1. Système de cuisson (10b) comprenant au moins une unité de support (100b), qui est prévue pour être disposée, dans au moins un état de fonctionnement de chauffage, au-dessus d'une plaque de couverture (16b), un bloc chauffant à induction (18b), qui est configuré pour chauffer au moins une partie de l'unité de support (100b), et une unité de positionnement (20b), qui est configurée pour aider à un positionnement de l'unité de support (100b) par rapport au bloc chauffant à induction (18b),
dans lequel l'unité de positionnement (20b) comprend au moins un élément de positionnement (22b) associé à l'unité de support (100b), qui est constitué sous forme d'élément inductif (118b), et est configuré pour contribuer au moins en partie à aider au positionnement de l'unité de support (100b) par rapport au bloc chauffant à induction (18b), et
dans lequel l'élément de positionnement (22b) est intégré au moins en partie dans l'unité de support (100b),
l'unité de support (100b) comprend au moins une unité de boîtier (104b), qui est configurée sous forme d'une unité de boîtier extérieur et forme au moins dans une large mesure un boîtier extérieur de l'unité de support (100b),
l'unité de boîtier (104b) définit un espace de réception (106b) pour recevoir des denrées alimentaires, et
dans lequel l'unité de positionnement (20b) est intégrée au moins en partie dans l'unité de boîtier (104b),
**caractérisé en ce que** l'unité de positionnement (20b) comprend une pluralité d'éléments de positionnement (22b), qui sont associés à l'unité de support (100b) et sont réalisés au moins essentiellement avec une construction identique à l'élément de positionnement (22b).

2. Système de cuisson (10b) selon la revendication 1, **caractérisé en ce que** l'élément de positionnement (22b) est constitué sous forme d'une bobine.

3. Système de cuisson (10b) selon l'une des revendications précédentes, **caractérisé en ce que** l'unité de positionnement (20b) comprend au moins un élément de positionnement supplémentaire (26b) associé au bloc chauffant à induction (18b) et correspondant à l'élément de positionnement (22b), qui est configuré pour interagir avec l'élément de positionnement (22b) afin d'aider au positionnement de l'unité de support (100b) par rapport au bloc chauffant à induction (18b).

4. Système de cuisson (10b) selon la revendication 3, **caractérisé en ce que** le bloc chauffant à induction (18b) comprend au moins un élément chauffant à induction (28b), avec lequel l'élément de positionnement supplémentaire (26b) est formé d'une seule pièce.

5. Système de cuisson (10b) selon l'une des revendications précédentes, **caractérisé en ce que** l'élément de positionnement (22b) est configuré pour se coupler par induction avec l'élément de positionnement supplémentaire (26b) afin d'aider au positionnement.

6. Système de cuisson (10b) selon l'une des revendications précédentes, **caractérisé par** une unité d'affichage de position (30b) qui est configurée pour afficher le positionnement sur la base d'une grandeur d'un paramètre inductif de l'élément de positionnement (22b).
